# EUROPÄISCHE PATENTSCHRIFT

(11) **EP 2 465 716 B1**
(45) Veröffentlichungstag und Bekanntmachung des Hinweises auf die Patenterteilung: **05.06.2013**
(21) Anmeldenummer: 11191647.4
(22) Anmeldetag: 02.12.2011
(51) Int. Cl.: B60J 1/20

(54) **Rollosystem für ein Kraftfahrzeug**
Roller blind system for a motor vehicle
Système de store à enrouleur pour un véhicule automobile

(30) Priorität: 17.12.2010 DE 102010063450
(43) Veröffentlichungstag der Anmeldung: 20.06.2012
(73) Patentinhaber: BOS GmbH & Co. KG, 73760 Ostfildern (DE)
(72) Erfinder: Walter, Herbert, 73061 Ebersbach (DE)
(74) Vertreter: Patentanwälte Ruff, Wilhelm, Beier, Dauster & Partner

(56) Entgegenhaltungen:
- EP-A2- 1 375 219
- WO-A1-03/024729
- DE-A1-102006 000 878

## Beschreibung

Die Erfindung betrifft ein Rollosystem nach dem Oberbegriff von Anspruch 1. Die Erfindung betrifft weiterhin ein Kraftfahrzeug, insbesondere einen PKW, mit einem solchen Rollosystem. Ein solches Rollosystem und ein solches Kraftfahrzeug sind aus DE 102006000878 A bekannt.

Ein gattungsgemäßes Rollosystem weist als wesentliche Komponenten ein flexibles Flächengebilde, eine Rollowelle, auf der das flexible Flächengebilde in einem Stauzustand des Rollosystems aufgewickelt ist und von der das flexible Flächengebilde zur Erzielung eines Funktionszustandes des Rollosystems abwickelbar ist, eine an einem der Rollowelle abgewandten Ende des Flächengebildes angebrachte Auszugstange und zwei Führungsschienen zur beidseitigen Führung der Auszugstange zwischen einer ersten dem Stauzustand zugeordneten Position und einer zweiten dem Funktionszustand zugeordneten Position auf.

Gattungsgemäße Rollosysteme sind in Kraftfahrzeugen, insbesondere der gehobenen Klasse, üblich. Als Laderaumabdeckungen dienen sie dem Schutz des Ladeguts vor neugierigen Blicken von außen. Als Beschattungs-Rollosysteme dienen sie dem Schutz der Insassen des Kraftfahrzeuges vor einstrahlendem Sonnenlicht. Das flexible Flächengebilde eines gattungsgemäßen Rollosystems ist auf der zumeist mittels einer Wickelfeder gespannten Rollowelle aufgewickelt, bis es durch eine Zugkraft an der Auszugstange zumindest partiell von der Rollowelle abgewickelt wird. Bei der gattungsgemäße Art von Rollosystemen ist die Auszugstange beidseitig in Führungen geführt, welches beispielsweise entlang der C-Säule eines Fahrzeugs verlaufen können und einen definierten Pfad zwischen der ersten und der zweiten Position der Auszugstange vorgeben. Zumeist sind gattungsgemäße Rollosysteme mittels eines Elektromotors steuerbar. Dies ist jedoch nicht zwingend der Fall.

Bekannte gattungsgemäße Rollosysteme sind insbesondere gut geeignet zur Abdeckung von im Wesentlichen ebenen Fensterflächen, da sie aufgrund der zumeist geraden Auszugstangen, der zumeist geraden Rollowelle und der sich aufgrund der Wickelfeder einstellenden geraden Ausrichtung des Flächengebildes zwischen Rollowelle und Auszugstange im Funktionszustand ein im Wesentlichen ebenes Flächengebilde zur Verfügung stellen.

In den letzten Jahren weichen Flächen in der Formgebung von Kraftfahrzeugen jedoch zunehmend von solchen ebenen Ausrichtungen ab, so dass die Beschattung mittels im Funktionszustand ebener Flächengebilde nicht mehr als ideal angesehen wird. Aus dem Stand der Technik ist es daher bereits bekannt geworden, statt der geraden Zugstangen entlang ihres Verlaufs gekrümmte Zugstangen zu verwenden. Auch ist es bekannt geworden, Rollowellen zu verwenden, die gekrümmt sind und durch eine fahrzeugfest vorgesehene gekrümmte Achse in dieser gekrümmten Stellung gehalten werden. So ist insbesondere bei Beschattungssystemen für den Dachbereich bereits bekannt, ein Rollo vorzusehen, dessen Flächengebilde im Funktionszustand entsprechend der Dachform des Fahrzeugs gewölbt ist.

Es hat sich jedoch gezeigt, dass insbesondere im Hinblick auf die Beschattung der Heckscheibe eines Fahrzeugs die bestehenden Systeme noch nicht ideal sind. So muss eine gekrümmte Auszugstange für ein Heckscheibenrollo im Stauzustand vorzugsweise etwa waagerecht ausgerichtet sein, da sie im Stauzustand über die Hutablage eines Fahrzeugs nicht unästhetisch hinausragen sollte. Diese waagerechte Stellung der gekrümmten Auszugstange stellt jedoch bei einem Heckscheibenrollo in der zweiten Position der Auszugstange keine ideale Ausrichtung dar, da aufgrund der Bombierung des Fahrzeugdachs und der Heckscheibe in einem etwa mittigen Bereich Sonnenlicht über die waagerecht ausgerichtete Auszugstange ungehindert in das Fahrzeug eindringen kann.

### Aufgabe und Lösung

Aufgabe der Erfindung ist es daher, ein verbessertes Rollosystem zur Verfügung zu stellen, welches im Hinblick auf die Abdeckung gewölbter Flächen, insbesondere gewölbter Fahrzeugfenster, gegenüber den bekannten Rollosystemen von Vorteil ist.

Erfindungsgemäß wird dies dadurch erreicht, dass die Auszugstange gekrümmt ausgebildet ist und dass vorgesehen ist, das die Auszugstange bei der Überführung aus ihrer ersten Position entlang der Führungsschienen zu ihrer zweiten Position um eine Auszugstangenachse verschwenkt wird.

Erfindungsgemäß ist demnach vorgesehen, dass die gekrümmte Auszugstange in ihrer ersten Position in einem anderen Schwenkwinkel als in ihrer zweiten Position ausgerichtet ist. Insbesondere kann die Auszugstange in ihrer ersten Position eine Stellung einnehmen, in der sie sich parallel zu einer horizontalen Ebene erstreckt, während sie in ihrer zweiten Position demgegenüber verschwenkt ist, so dass ein Mittelteil der Auszugstange gegenüber den beidseits in den Führungsschienen angeordneten Enden erhöht ist. Hierdurch wird erreicht, dass auch in diesem mittleren Bereich kein Licht durch die Scheibe, insbesondere die Heckscheibe, ungehindert in den Fahrzeuginnenraum gelangen kann. Als Krümmung im Sinne der Erfindung wird ein Verlauf der Auszugstange verstanden, bei dem ein bezogen auf die Längsrichtung mittiger Befestigungspunkt des Flächengebildes an der Auszugstange um mindestens 5mm, vorzugsweise um mindestens 10mm, von einer gedachten Verbindungslinie beabstandet ist, die außen am Flächengebilde gelegene Befestigungspunkte des Flächengebildes an der Auszugstange miteinander verbindet.

Grundsätzlich ist denkbar, dass das Verschwenken der Auszugstange durch einen hierfür vorgesehenen separaten Motor bewirkt wird. Vorzugsweise wird die Schwenkbewegung jedoch durch eine mechanische Kopplung mit der Position der Auszugstange entlang der Führungsschienen bewirkt, insbesondere vorzugsweise durch eine unmittelbare Wechselwirkung zwischen den Führungsschienen und der der Auszugstange. Hierfür wird als vorteilhafteste Lösung angesehen, wenn die Auszugstange derart durch die Führungsschienen geführt wird, dass sie sich entsprechend der Ausrichtung der Führungsschienen ausrichtet, wobei die Führungsschienen zumindest abschnittsweise gebogen sind, so dass im Bereich dieser Biegung auch die zwangsläufige Schwenkbewegung der Auszugstange stattfindet.

Eine besonders gute Beschattungswirkung ergibt sich dadurch, dass auch die Rollowelle gekrümmt ausgebildet ist, wobei eine mittlere Krümmung der Rollowelle vorzugsweise in etwa (+/- 20%) einer mittleren Krümmung der Auszugstange entspricht. Eine gekrümmte Rollowelle kann beispielsweise dadurch erzielt werden, dass die Rollowelle aufgrund der Materialwahl in sich biegbar ist oder aber aus gegeneinander zumindest geringfügig anwinkelbaren Einzelsegmenten besteht. In beiden Fällen ist ein Träger, beispielsweise in Form einer gekrümmten Achse, vorzusehen, der die definierte Krümmung der Rollowelle aufrechterhält. Durch die Krümmung auch der Rollowelle wird erreicht, dass das Flächengebilde im Funktionszustand an beiden Enden gewölbt gehalten wird und somit in seiner Gesamtheit eine wünschenswerte Wölbung zeigt.

Besonders von Vorteil ist, es dass die Rollowelle an einem Rollowellenträger drehbar gelagert ist, wobei der Rollowellenträger um eine Rollowellenträgerachse schwenkbar ausgebildet ist.

Bei dieser Gestaltung ist somit die Rollowelle nicht nur in sich gekrümmt, sondern kann ähnlich der Auszugstange, um eine Rollowellenträgerachse, welche parallel zur Auszugstangenachse ausgerichtet ist, verschwenkt werden. Dies gestattet es, in noch besserer Art und Weise eine Annäherung des Flächengebildes im Funktionszustand an die zu beschattende Scheibe, insbesondere Heckscheibe, zu bewirken, da sich durch die Verschwenkbarkeit der Rollowelle auch diese dem zumeist unteren Ende der Scheibe besser annähern lässt. Ein besonderer Vorteil im Zusammenhang mit der Schwenkbeweglichkeit des Rollowellenträgers liegt darin, dass hierdurch der durch die Schwenkbewegung der gekrümmten Auszugstange bewirkte ungleichmäßige Zug auf das Flächengebilde kompensiert wird. Wenn nämlich die Auszugstange im Zuge ihrer Bewegung in die zweite Position verschwenkt wird, wird ein mittlerer Teil des Flächengebildes phasenweise schneller bewegt als die beiden sich seitlich daran anschließenden Randbereiche. Durch die Verschwenkbarkeit des Rollowellenträgers und somit der gekrümmten Rollowelle kann diese dieser Bewegung der Auszugstange zumindest in etwa folgen und somit den sonst zu befürchtenden Faltenwurf verhindern.

Hierbei reicht es im einfachsten Falle aus, dass dieser Ausgleich lediglich dann vorliegt, wenn die Auszugstange in ihrer ersten und in ihrer zweiten Position angeordnet ist. So kann beispielsweise vorgesehen sein, dass bei der Bewegung der Auszugstange aus der ersten Position in die zweite Position gleich zu Beginn der Bewegung ein Verschwenken der Rollowelle stattfindet, wobei die Rollowelle unmittelbar einen Schwenkwinkel annimmt, der dem Schwenkwinkel der Auszugstange in der zweiten Position ähnelt. Auch ist es möglich, die Schwenkbewegung des Rollowellenträgers erst an das Ende der Bewegung der Auszugstange zu verlegen, so dass der Rollowellenträger bei der Überführung der Auszugstange von der ersten Position in die zweite Position zunächst unbeweglich bleibt und erst unmittelbar vor oder bei Erreichen der zweiten Position durch die Auszugstange verschwenkt wird.

Von Vorteil ist es allerdings, wenn die Auszugstange und der Rollowellenträger derart miteinander wirkgekoppelt sind, dass eine Schwenkbewegung des Rollowellenträger und der Auszugstange stets gleichgerichtet erfolgt, vorzugsweise im Wesentlichen mit der gleichen Schwenkgeschwindigkeit. Bei einer solchen Gestaltung ist demnach vorgesehen, dass die Auszugstange und der Rollowellenträger sich in etwa parallel zueinander bewegen. Sobald die Auszugstange verschwenkt wird, verschwenkt auch der Rollowellenträger. Somit ist auch während der Überführung der Auszugstange zwischen den beiden Positionen gewährleistet, dass es nicht zu einem störenden Faltenwurf kommt. Als im Wesentlichen gleiche Schwenkgeschwindigkeit im Sinne dieser Erfindung wird eine Schwenkgeschwindigkeitsdifferenz von maximal 20% verstanden.

Von Vorteil ist es, wenn eine Rückstellfeder vorgesehen ist, durch die der Rollowellenträger in Richtung eines Anschlags gedrückt wird und gegen deren Kraft der Rollowellenträger schwenkbar auslenkbar ist. Bei einer solchen Gestaltung ist somit eine der Rückstellfeder entgegenwirkende Gegenkraft erforderlich. Diese wird vorzugsweise durch die Verlagerung der Auszugstange in die zweite Position bewirkt. Bei einer Rückkehr der Auszugstange in die erste Position entfällt diese Gegenkraft, so dass die Rückstellfeder zuverlässig den Rollowellenträger in eine durch den Anschlag definierte Position drückt.

Eine erste Möglichkeit zur Erzeugung dieser Gegenkraft sieht vor, dass eine zwischen dem Rollowellenträger und der Rollowelle wirkende Wickelfeder und die Rückstellfeder derart aufeinander abgestimmt ist, dass im Stauzustand des Rollosystems der Rollowellenträger am Anschlag anliegt und im Funktionszustand des Rollosystems der Rollowellenträger vom Anschlag beabstandet ist. Die Abstimmung mit der Wickelfeder ist dabei so geartet, dass in der ersten Position die Kraft der Rückstellfeder größer ist als die Wickelfeder, so dass der Rollowellenträger gegen den Anschlag gedrückt wird. Im Zuge der Überführung der Auszugstange in ihre zweite Position wird die beispielsweise als Schraubenfeder ausgebildete Wickelfeder gespannt, so dass sie eine Kraftwirkung auf den Rollowellenträger ausübt, die größer als die der Rückstellfeder ist. In der Konsequenz kommt es zu einer Schwenkbewegung des Rollowellenträgers vom Anschlag weg.

Bevorzugt ist jedoch eine Gestaltung, bei der ein Elektromotor vorgesehen ist, mittels dessen die Schwenkbewegung des Rollowellenträgers steuerbar ist. Dieser Elektromotor kann durch ein Steuersystem angesteuert werden, welches auch für die Bewegung der Auszugstange verantwortlich ist. Besonders von Vorteil ist es, wenn der Elektromotor, mittels dessen die Schwenkbewegung des Rollowellenträgers steuerbar ist, gleichzeitig dazu dient, die Bewegung der Auszugstange zwischen der ersten Position und der zweiten Position zu steuern. Bei einer solchen Gestaltung wird somit nur ein Motor verwendet, der sowohl die Bewegung der Auszugstange in den Führungsschienen als auch die Bewegung des Rollowellenträgers bewirkt. Eine besonders vorteilhafte Anbindung des Elektromotors an den Rollowellenträger zum Einen und die Auszugstange zum Anderen wird durch ein flexibles Schub- und/oder Zugglied erreicht, welches mittels des Elektromotors in seiner Erstreckungsrichtung beweglich ist. Ein solches Schub- und/oder Zugglied kann im einfachsten Falle als nur auf Zug belastbares Seil ausgebildet sein. Eine höhere Zuverlässigkeit wird mit einem bewegbaren Schubglied erreicht, welches in rohrartigen Kanälen geführt ist. Solche Schubglieder sind zur Bewegung von Auszugstangen allgemein bekannt. Sie können jedoch vorteilhaft auch zur Bewegung des Rollowellenträgers Verwendung finden. Hierbei ist es konstruktiv besonders von Vorteil, wenn die Auszugstange und der Rollowellenträger auf einander gegenüberliegenden Seiten des Motors mit dem Schub- und/oder Zugglied verbunden sind. Bei einer solchen Gestaltung kann man sich zunutze machen, dass für biegbare Schubglieder üblicherweise ein zur Führungsschiene verlaufendes Arbeitsrohr und ein in der entgegengesetzten Richtung verlaufendes Speicherrohr vorgesehen sind, wobei das Speicherrohr bei bekannten Gestaltungen lediglich der Aufnahme des Schubgliedes dient, wenn dieses - im Stauzustand des Rollosystems - zum überwiegenden Teil aus der Führungsschiene herausgezogen ist. Dieses Speicherrohr kann bei der erfindungsgemäßen Gestaltung Verwendung finden, um zu einem Getriebe zu führen, welches für die Bewegung des Rollowellenträgers ausgebildet ist.

Es ist insbesondere von Vorteil, wenn der Elektromotor, insbesondere über das genannte Schub- und/oder Zugglied, zur translativen oder rotativen Bewegung einer Steuerkurve ausgebildet ist, wobei am Rollowellenträger eine mit der Steuerkurve im Eingriff befindliche Steuernocke vorgesehen ist. Die Steuerkurve wird durch den Elektromotor, insbesondere durch die translative Bewegung eines Schubgliedes, translative oder rotativ bewegt. Die Steuernocke wird bei dieser Bewegung von der Steuerkurve ausgelenkt, wobei durch die Formgebung der Steuerkurve eine sehr flexible Steuerung der Schwenkbewegung des Rollowellenträgers möglich ist. Dies gestattet es, die Steuerkurve derart auszugestalten, dass stets eine im Wesentlichen gleich gerichtete und mit gleicher Geschwindigkeit ablaufende Schwenkbewegung sowohl an der Auszugstange als auch am Rollowellenträger erreicht wird.

Die Erfindung betrifft weiterhin ein Kraftfahrzeug mit einem Rollosystem der oben beschriebenen Art. Insbesondere von Vorteil ist es, wenn dieses Rollosystem im Bereich einer Heckscheibe des Fahrzeugs vorgesehen ist.

### Kurzbeschreibung der Zeichnungen

Weitere Vorteile und Aspekte der Erfindung ergeben sich außer aus den Ansprüchen auch aus der nachfolgenden Beschreibung eines bevorzugten Ausführungsbeispiels der Erfindung, welches anhand der Figuren erläutert wird. Dabei zeigen:
- Fig. 1 und 1a: ein erfindungsgemäßes Rollosystem in einem Stauzustand und ein Getriebe zur Ansteuerung eines Rollowellenträgers in diesem Zustand,
- Fig. 2 und 2a: das Rollosystem und das Getriebe der Fig. 1 und 1a in einem Zwischenzustand und
- Fig. 3: das Rollosystem der Fig. 1 und 2 in einem Funktionszustand.

### Detaillierte Beschreibung des Ausführungsbeispiels

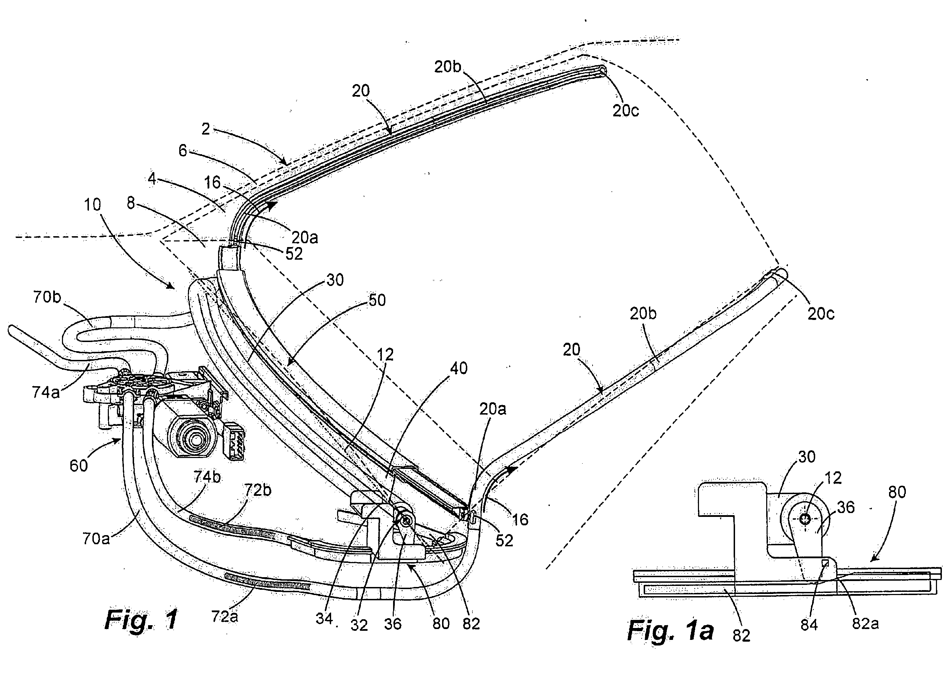

Die Fig. 1 zeigt ein erfindungsgemäßes Rollosystem 10, welches im Bereich einer Heckscheibe 4 eines lediglich angedeuteten Fahrzeugs 2 vorgesehen ist. Dieses Rollosystem 10 verfügt über folgende Hauptkomponenten: Im Bereich der C-Säulen 6 des Fahrzeugs sind zwei aufeinander zuweisen offene Führungsschienen 20 vorgesehen, die einen im Wesentlichen gekrümmten Bereich 20a aufweisen, an den sich ein im Wesentlichen geradliniger Bereich 20b anschließt. Im Bereich einer Hutablage 8 des Fahrzeugs ist eine gebogene Rollowelle 30 vorgesehen, welches durch eine in sich starre Rollowellenachse 34 in ihrer Krümmung gehalten wird. Die Rollowelle 30 kann aus gegeneinander anwinkelbaren und drehstarr miteinander verbundenen Einzelsegmenten oder aus einem in sich flexiblen Rollowellenkörper bestehen. Die gekrümmte Rollowellenachse 34 ist Teil eines Rollowellenträgers 32, der mittels einer nicht näher dargestellten Lagerung um eine Rollowellenträgerachse 12 verschwenkbar ist. Auf der Rollowelle 34 ist ein Flächengebilde 40 aufgewickelt, dessen freies Ende an einer Auszugstange 50 befestigt ist. Diese Auszugstange 50 ist entsprechend der Rollowelle 34 gekrümmt ausgebildet und an ihren beiden Enden mit Eingriffsabschnitten 52 versehen, die in die beiden Führungsschienen 20 eingreifen. Da die Führungsschienen 20 einen sich zum distalen Ende 20c hin verringernden Abstand haben, ist die Auszugstange 50 als teleskopierbar längenveränderliche Auszugstange ausgebildet.

Zur Bewegung der Auszugstange 50 in den Führungsschienen 20 ist ein Elektromotor 60 vorgesehen. Von diesem verlaufen rohrartige Kanäle 70a, 70b zu den heckseitigen Enden der Führungsschienen 20, wobei biegbare und für die Übertragung von Schubkräften geeignete und in den Figuren lediglich angedeutete Stränge 72a, 72b innerhalb dieser Kanäle 70a, 70b angeordnet sind. Durch Bestromung des Elektromotors 60 können die beiden Stränge 72a, 72b in entgegengesetzte Richtungen bewegt werden, so dass sie gemeinsam die Auszugstange 50 aus ihrer in Fig. 1 dargestellten ersten Position verschieben. Weiterhin sind am Motor 60 zwei Speicherrohre 74a, 74b vorgesehen, in die die Stränge 72a, 72b einfahren, wenn sie aus den Führungsschienen 20 mittels des Motors herausgezogen wird. Während das Speicherrohr 74a keinen dardarüber hinausgehenden Zweck erfüllt, verläuft das Speicherrohr 74b zu einem Steuerkurvengetriebe 80. Dieses ist in Fig. 1a näher dargestellt. Das Steuerkurvengetriebe 80 verfügt über einen in den Darstellungen nicht näher erkennbaren Kanal, innerhalb dessen ein Steuerkurvenelement 82 translativ beweglich ist. Weiterhin ragt eine drehfest mit der Achse 34 des Rollowellenträgers 32 verbundene Steuernocke 36 in diesen Kanal hinein, so dass eine im Weiteren noch erläuterte Wechselwirkung zwischen dem Steuerkurvenelement 82 und der Steuernocke 36 erzielt wird. Solange eine derartige Wechselwirkung noch nicht gegeben ist, wird die Steuernocke 36 und mit ihr der gesamte Rollowellenträger 32 durch eine nicht dargestellte Rückstellfeder gegen einen Anschlag 84 gedrückt und nimmt somit eine definierte Position ein.

Fig. 1 zeigt einen Stauzustand des Rollosystems 10. In diesem Stauzustand befinden sich sowohl die gekrümmte Rollowelle 30 als auch die gekrümmte Auszugstange 50 in einer in etwa horizontalen Position. Dies gestattet es, die Auszugstange 50 im Bereich der Hutablage 8 fast unsichtbar zu versenken.

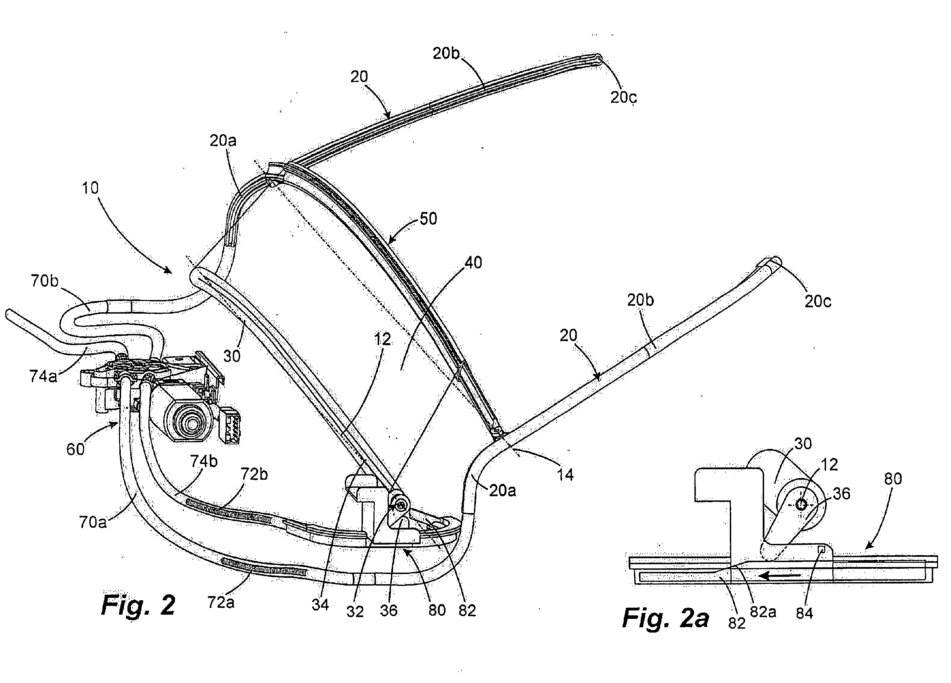

Zur Überführung des Rollosystems in einen Funktionszustand werden die Stränge 72a, 72b durch den Motor 60 in die Führungsschienen 20 hineinverschoben. Sie wirken auf die Eingriffsabschnitte 52 der Auszugstange 50, welches sich im Zuge dessen entlang der in Fig. 1 dargestellten Pfeile 16 verlagern. Aufgrund der durch die Führungsabschnitte 52 erzielten Zwangskopplung zwischen der Erstreckungsrichtung der Führungsschienen 20 und der Ausrichtung des Auszugprofils 50 kommt es in der in Fig. 2a ersichtlichen Weise hierbei zu einem Verschwenken der Auszugstange 50. Diese wird aus ihrer zuvor in etwa horizontalen Lage in Richtung einer vertikalen Lage in der Zwischenposition der Fig. 2 verschwenkt.

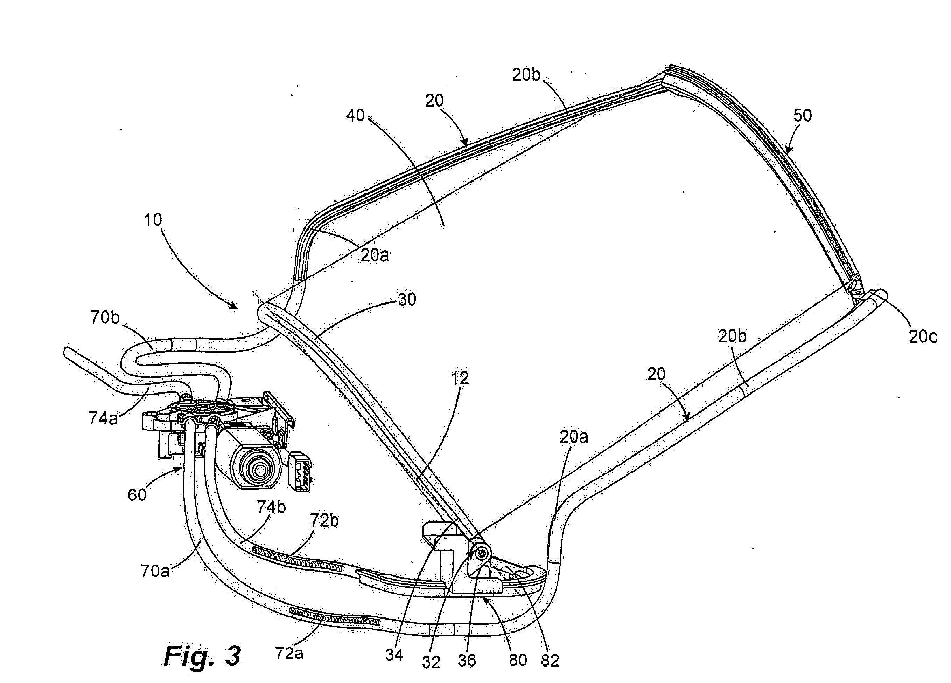

Gleichzeitig kommt es in der in Fig. 2a ersichtlichen Weise zu einem Verschwenken der Steuernocke 36 durch das durch die Bewegung des Strangs 72b ebenfalls bewegte Steuerkurvenelement 82. Durch eine Steigung 82a in diesem wird die Steuernocke 36 gegen die Kraft der nicht dargestellten Rückstellfeder vom Anschlag 84 beabstandet und schwenkt gemeinsam mit dem Rollowellenträger 32 in seiner Gesamtheit um die korrespondierende Schwenkachse 12. Wie in Fig. 2 ersichtlich ist, führt dies dazu, dass die gekrümmte Rollowelle 30 etwa gleichzeitig und in etwa gleichem Maße wie die Auszugstange 50 auch verschwenkt wird. Hierdurch nähert sich die Rollowelle 30 zum einen der Heckscheibe 4 des Fahrzeugs 2 an. Zum anderen gewährleistet es, dass es nicht aufgrund der gegenüber den Randbereichen des Flächengebildes 40 erhöhten Geschwindigkeit des Mittelbereichs des Flächengebildes 40 in den Randbereichen zu Faltenwurf kommt. Die ausgehend von dem Zwischenzustand der Fig. 2 fortgesetzte Bewegung der Auszugstange 50 entlang der Führungsschienen 20 führt zu keiner nennenswerten Schwenkbewegung mehr auf Seiten der Auszugstange 50 und der Rollowelle 30. Diese verharren weitgehend in der Schwenkstellung der Fig. 2, bis der Funktionszustand der Fig. 3 erreicht wurde. In diesem Funktionszustand ist eine nahezu ideal gewölbte Abschattung des Heckfensters 4 gegeben, bei der insbesondere auch der mittlere, obere Bereich des Heckfensters 4 aufgrund der verschwenkten Position der Auszugstange 50 gut abgedeckt ist.

Die Überführung des Rollosystems 10 zurück in seinen Stauzustand erfolgt mit jeweils gegenläufigen Bewegungsabläufen. Sobald die Auszugstange 50 wieder den gekrümmten Bereich 20b der Führungsschienen 20 erreicht, geht sie wieder in ihre etwa horizontale Ausrichtung der Fig. 1 über. Gleichzeitig führt die Verlagerung des Steuerkurvenelements 82 in Verbindung mit der nicht dargestellten Rückstellfeder wieder zu einem Verschwenken der Rollowelle 30 in ihre Ausgangsstellung der Fig. 1, so dass gegen Ende des Rücküberführvorgangs wieder der Zustand der Fig. 1 erreicht wird.

## Patentansprüche

1. Rollosystem (10) für ein Kraftfahrzeug (2), insbesondere zur Abdeckung einer Fahrzeugscheibe (4), mit
- einem flexiblen Flächengebilde (40),
- einer Rollowelle (30), auf der das flexible Flächengebilde (40) in einem Stauzustand des Rollosystems (10) aufgewickelt ist und von der das flexible Flächengebilde (40) zur Erzielung eines Funktionszustandes des Rollosystems (10) abwickelbar ist,
- einer an einem der Rollowelle (30) abgewandten Ende des Flächengebildes (40) angebrachten Auszugstange (50) und
- zwei Führungsschienen (20) zur beidseitigen Führung der Auszugstange (50) zwischen einer ersten dem Stauzustand zugeordneten Position und einer zweiten dem Funktionszustand zugeordneten Position,
wobei die Auszugstange (50) gekrümmt ausgebildet ist und bei der Überführung aus ihrer ersten Position entlang der Führungsschienen (20) zu ihrer zweiten Position um eine Auszugstangenachse (14) verschwenkt wird,
**dadurch gekennzeichnet, dass**
- die Rollowelle (30) als gekrümmte Rollowelle (30) ausgebildet ist, wobei eine mittlere Krümmung der Rollowelle (30) vorzugsweise in etwa einer mittleren Krümmung der Auszugstange (30) entspricht, und
- die Rollowelle (30) an einem Rollowellenträger (32) drehbar gelagert ist, wobei der Rollowellenträger (32) um eine Rollowellenträgerachse (12) schwenkbar ausgebildet ist.

2. Rollosystem (10) nach Anspruch 1,
**dadurch gekennzeichnet, dass**
die Auszugstange (50) und der Rollowellenträger (32) derart miteinander wirkgekoppelt sind, dass eine Schwenkbewegung des Rollowellenträgers (32) und der Auszugstange (50) stets gleichgerichtet erfolgt, vorzugsweise im Wesentlichen mit der gleichen Schwenkgeschwindigkeit.

3. Rollosystem (10) nach Anspruch 1 oder 2,
**gekennzeichnet durch**
eine Rückstellfeder, **durch** die der Rollowellenträger (32) in Richtung eines Anschlags (84) gedrückt wird und gegen deren Kraft der Rollowellenträger (32) schwenkbar auslenkbar ist.

4. Rollosystem nach Anspruch 3,
**dadurch gekennzeichnet, dass**
eine zwischen dem Rollowellenträger und der Rollowelle wirkende Wickelfeder und die Rückstellfeder derart aufeinander abgestimmt sind, dass im Stauzustand des Rollosystems der Rollowellenträger am Anschlag anliegt und im Funktionszustand des Rollosystems der Rollowellenträger vom Anschlag beabstandet ist.

5. Rollosystem (10) nach einem der Ansprüche 1 bis 4,
**dadurch gekennzeichnet, dass**
ein Elektromotor (60) vorgesehen ist, mittels dessen die Schwenkbewegung des Rollowellenträgers (32) steuerbar ist.

6. Rollosystem (10) nach Anspruch 5,
**dadurch gekennzeichnet, dass**
mittels des Elektromotors (60) die Bewegung der Auszugstange (50) zwischen der ersten Position und der zweiten Position steuerbar ist.

7. Rollosystem (10) nach Anspruch 6,
**gekennzeichnet durch**
ein flexibles Schub- und/oder Zugglied (72b), welches mittels des Elektromotors (60) in seiner Erstreckungsrichtung beweglich ist, wobei sowohl die Auszugstange (50) als auch der Rollowellenträger (32) mittels dieses Schub- und/oder Zuggliedes (72b) bewegbar sind.

8. Rollosystem (10) nach Anspruch 7,
**dadurch gekennzeichnet, dass**
die Auszugstange (50) und der Rollowellenträger (32) auf einander gegenüberliegenden Seiten des Motors (60) mit dem Schub- und/oder Zugglied (72b) verbunden sind.

9. Rollosystem (10) nach einem der Ansprüche 5 bis 8,
**dadurch gekennzeichnet, dass**
der Elektromotor zur translativen oder rotativen Bewegung einer Steuerkurve (82) ausgebildet ist und am Rollowellenträger (32) eine mit der Steuerkurve (82) im Eingriff befindliche Steuernocke (38) vorgesehen ist.

10. Kraftfahrzeug (2) mit einem Rollosystem (10), insbesondere zur Abdeckung einer Fensterfläche (4) des Fahrzeugs,
**dadurch gekennzeichnet, dass**
das Rollosystem (10) nach einem der vorstehenden Ansprüche ausgebildet ist. - - - - - - - - - -

## Claims

1. Roller blind system (10) for a motor vehicle (2), in particular for covering a vehicle window (4), having
- a flexible planar structure (40),
- a roller blind shaft (30) onto which the flexible planar structure (40) is wound in a stowed state of the roller blind system (10) and from which the flexible planar structure (40) can be unwound for achieving a functioning state of the roller blind system (10),
- a pull-out bar (50) attached to an end of the planar structure (40) facing away from the roller blind shaft (30) and
- two guide rails (20) for guidance of the pull-out bar (50) on both sides between a first position associated with the stowed state and a second position associated with the functioning state, where the pull-out bar (50) is designed curved and is swivelled about a pull-out bar axis (14) during the movement along the guide rails (20) from its first position to its second position,
**characterized in that**
- the roller blind shaft (30) is designed as a curved roller blind shaft (30), where a mean curvature of the roller blind shaft (30) corresponds approximately to a mean curvature of the pull-out bar (50), and
- the roller blind shaft (30) is rotatably mounted on a roller blind shaft support (32), where said roller blind shaft support (32) is designed rotatable about a roller blind shaft support axis (12).

2. Roller blind system (10) according to Claim 1,
**characterized in that**
the pull-out bar (50) and the roller blind shaft support (32) are operatively connected to one another such that a swivel movement of the roller blind shaft support (32) and of the pull-out bar (50) is always in the same direction, preferably substantially with the same swivel speed.

3. Roller blind system (10) according to Claim 1 or 2,
**characterized by**
a resetting spring which presses the roller blind shaft support (32) in the direction of a stop (84) and against whose force the roller blind shaft support (32) can be swivellably deflected.

4. Roller blind system according to Claim 3,
**characterized in that**
a winding spring, acting between the roller blind shaft support and the roller blind shaft, and the resetting spring are adjusted to one another such that in the stowed state of the roller blind system the roller blind shaft support is in contact with the stop, and in the functioning state of the roller blind system the roller blind shaft support is at a distance from the stop.

5. Roller blind system (10) according to one of Claims 1 to 4,
**characterized in that**
an electric motor (60) is provided by means of which the swivel movement of the roller blind shaft support (32) can be controlled.

6. Roller blind system (10) according to Claim 5,
**characterized in that**
the movement of the pull-out bar (50) between the first position and the second position can be controlled by the electric motor (60).

7. Roller blind system (10) according to Claim 6,
**characterized by**
a flexible pushing and/or pulling member (72b) movable in its extension direction by means of the electric motor (60), where both the pull-out bar (50) and the roller blind shaft support (32) can be moved by means of this pushing and/or pulling member (72b).

8. Roller blind system (10) according to Claim 7,
**characterized in that**
the pull-out bar (50) and the roller blind shaft support (32) are connected at opposite sides of the motor (60) to the pushing and/or pulling member (72b).

9. Roller blind system (10) according to one of Claims 5 to 8,
**characterized in that**
the electric motor is designed for translative or rotative movement of a flat control cam (82), and an eccentric control cam (36) engaging said flat control cam (82) is provided on the roller blind shaft support (32).

10. Vehicle (2) having a roller blind system (10), in particular for covering a window surface (4) of the vehicle,
**characterized in that**
the roller blind system (10) is designed according to one of the preceding claims.

## Revendications

1. Système de store (10) pour un véhicule automobile (2), destiné en particulier à recouvrir la vitre d'un véhicule automobile (4), comprenant
- une structure plane souple (40),
- un arbre de store (30) sur lequel la structure plane souple (40) est enroulée à l'état rangé du système de store (10) et depuis lequel la structure plane souple (40) peut être déroulée pour obtenir un état fonctionnel du store (10),
- une barre de déroulement (50) fixée sur une extrémité de la structure plane souple (40) opposée à l'arbre de store (30), et
- deux rails de guidage (20) pour un guidage bilatéral de la barre de déroulement (50) entre une première position associée à l'état rangé et une seconde position associée à l'état fonctionnel,
sachant que la barre de déroulement (50) est conçue en forme incurvée et pivotée autour d'un axe (14) de la barre de déroulement lors du passage de sa première position à sa seconde position le long des rails de guidage (20),
**caractérisé en ce**
- **que** l'arbre de store (30) est conçu comme arbre de store incurvé (30), une courbure moyenne de l'arbre de store (30) correspondant de préférence approximativement à une courbure moyenne de la barre de déroulement (30), et
- **que** l'arbre de store (30) est logé de façon pivotante dans un support d'arbre de store (32), le support d'arbre de store (32) étant conçu pour pivoter autour d'un axe d'arbre de store (12).

2. Système de store (10) selon la revendication 1,
**caractérisé en ce**
**que** la barre de déroulement (50) et le support d'arbre de store (32) sont couplés activement d'une manière telle qu'un mouvement de pivotement du support d'arbre de store (32) et de la barre de déroulement (50) s'effectue toujours dans une même direction, de préférence quasiment à la même vitesse de pivotement.

3. Système de store (10) selon la revendication 1 ou 2,
**caractérisé par**
un ressort de rappel par lequel le support d'arbre de store (32) est pressé en direction d'une butée (84) et contre la force duquel le support d'arbre de store (32) peut être dévié par pivotement.

4. Système de store selon la revendication 3,
**caractérisé en ce**
**qu'**un ressort spiral, agissant entre le support d'arbre de store et l'arbre de store, et le ressort de rappel sont coordonnés de sorte qu'à l'état rangé du système de store, le support d'arbre de store s'appuie sur la butée, et qu'à l'état fonctionnel du système de store, le support d'arbre de store est éloigné de la butée.

5. Système de store (10) selon l'une des revendications 1 à 4,
**caractérisé en ce**
**qu'**est prévu un moteur électrique (60) au moyen duquel peut être commandé le mouvement de pivotement du support d'arbre de store (32).

6. Système de store (10) selon la revendication 5,
**caractérisé en ce**
**que** le déplacement de la barre de déroulement (50) entre la première position et la seconde position peut être commandé au moyen du moteur électrique (60).

7. Système de store (10) selon la revendication 6,
**caractérisé par**
un organe de poussée et/ou de traction flexible (72b) mobile dans sa direction d'extension au moyen du moteur électrique (60), la barre de déroulement (50) et le support d'arbre de store (32) pouvant être déplacés au moyen de cet organe de poussée et/ou de traction (72b).

8. Système de store (10) selon la revendication 7,
**caractérisé en ce**
**que** la barre de déroulement (50) et le support d'arbre de store (32) sont raccordés à l'organe de poussée et/ou de traction (72b) sur des côtés opposés du moteur (60).

9. Système de store (10) selon l'une des revendications 5 à 8,
**caractérisé en ce**
**que** le moteur électrique est conçu pour un mouvement translatoire ou rotatif d'une piste de commande (82), et que sur le support d'arbre de store (32) est prévue une came de commande (36) en prise avec la piste de commande (82).

10. Véhicule automobile (2) avec un système de store (10), en particulier pour recouvrir une surface vitrée (4) du véhicule,
**caractérisé en ce**
**que** le système de store (10) est conçu selon l'une des revendications précédentes.
